**Europäisches Patentamt**

**European Patent Office**

**Office européen des brevets**

(19)

(11) Veröffentlichungsnummer: **0 009 006**
B1

(12)

# EUROPÄISCHE PATENTSCHRIFT

(45) Veröffentlichungstag der Patentschrift:
**14.04.82**

(21) Anmeldenummer: **79810083.0**

(22) Anmeldetag: **31.08.79**

(51) Int. Cl.³: **C 08 G 14/10,** C 08 K 3/32,
C 08 K 3/38, C 08 L 61/34

(54) **Verfahren zur Herstellung von weissen und vergilbungsbeständigen Melamin-Phenol-Aldehydharzen.**

(30) Priorität: **06.09.78  CH 9364/78**

(43) Veröffentlichungstag der Anmeldung:
**19.03.80 Patentblatt 80/6**

(45) Bekanntmachung des Hinweises auf die Patenterteilung:
**14.04.82 Patentblatt 82/15**

(84) Benannte Vertragsstaaten:
**DE GB SE**

(56) Entgegenhaltungen:
**GB-A-1 057 400**
**US-A-3 321 551**

(73) Patentinhaber: **CIBA-GEIGY AG, Patentabteilung
Postfach, CH-4002 Basel (CH)**

(72) Erfinder: **Felnauer, Dieter, Dr., Maldegemstrasse 8,
D-6840 Lampertheim (DE)**
Erfinder: **Streinz, Ludwig, Burgstrasse 35-37,
D-6800 Mannheim 1 (DE)**

Verfahren zur Herstellung von weissen und vergilbungsbeständigen Melaminphenolaldehydharzen

Die vorliegende Erfindung betrifft ein Verfahren zur Herstellung von Melaminphenolaldehydharzen in wässrig-basischem Medium, bei dem der Reaktionsmischung oder dem isolierten Trockenharz ein Ammonium- oder Alkaliphosphat oder -borat zugegeben wird und das gebildete Harz durch Entwässerung bei höheren Temperaturen isoliert bzw. das Trockenharz einer höheren Temperatur ausgesetzt wird.

Phenolaldehydharze und Melamin-modifizierte Phenolaldehydharze haben als Imprägnier- und Pressharze schon seit langem Eingang in die Technik gefunden. Als ein wesentlicher und bekannter Nachteil dieser Harze wird ihre gelbe bis rötlichbraune Farbe angesehen. Zudem besteht noch die Neigung, dass sich die Farbe durch Licht- oder Lufteinwirkung weiter verschlechtert. Dieser Nachteil haftet besonders jenen Harzen an, die bei pH-Werten des Reaktionsmediums von mehr als 7,5 erhalten werden.

Die Eigenfarbe der Harze macht den Zusatz von geeigneten Additiven wie optischen Aufhellern und die Verwendung von Weisspigmenten notwendig, um zu optisch ausreichenden Gebrauchsartikeln zu gelangen. Hiermit kann aber der Nachteil des Nachdunkelns nicht behoben werden. Ein wesentlicher Nachteil der verfärbten Harze ist es auch, dass bestimmte Farbtöne mit Hilfe von Farbstoffen oder Pigmenten nicht eingestellt werden können, da die Eigenfarbe oft zur Gesamtfarbe beiträgt.

Es sind schon Verfahren zur Herstellung praktisch farbloser Melamin-modifizierter Phenolaldehydharze vorgeschlagen worden. Das britische Patent Nr. 1057400 offenbart, die Polykondensation bei einem pH-Wert von 6,0 bis 7,5 vorzunehmen. Das amerikanische Patent Nr. 3321551 schlägt ein Mehrstufenverfahren vor, bei dem die Polykondensation eines Phenolaldehydpräkondensates mit Melamin bei einem pH-Wert von 6,9 bis 7,8 durchgeführt wird. Eigene Versuche ergaben, dass bei diesen pH-Werten hergestellte Harzlösungen zum Gelieren neigen und daher für z.B. das Trockenimprägnierverfahren nicht ausreichend lagerstabil sind.

Lagerstabile Harzlösungen werden bei pH-Werten von mehr als 8 erhalten, wobei jedoch die Eigenfarbe der gebildeten Harze nachteilig ist. Aufgabe vorliegender Erfindung ist es, ein Verfahren zur Herstellung von weissen und weitgehend vergilbungsbeständigen, auch ausreichend lagerstabilen Melaminphenolaldehydharzen aufzuzeigen, das bei pH-Werten von über 8 durchgeführt wird.

Gegenstand vorliegender Erfindung ist ein Verfahren zur Herstellung von im wesentlichen weissen und vergilbungsbeständigen Melaminphenolaldehydharzen durch die Polykondensation von unsubstituiertem oder alkylsubstituiertem Melamin mit ein- oder mehrwertigen, unsubstituierten oder alkylsubstituierten Phenolen und einem Aldehyd in einem wässrigen-basischen Reaktionsmedium bei einem pH-Wert zwischen 8 und 11, das dadurch gekennzeichnet ist, dass man der Reaktionsmischung oder dem isolierten Trockenharz ein oder mehrere wasserlösliche Ammonium- oder Alkaliphosphate oder -borate in einer Menge von mindestens 0,05 Gew.%, bezogen auf die Reaktionsmischung bzw. das Trockenharz, zugibt und danach das gebildete Harz durch Entwässerung bei einer Temperatur von mindestens 70°C isoliert oder das Trockenharz auf mindestens 70°C erwärmt.

Für das erfindungsgemässe Verfahren wird insbesondere Melamin eingesetzt. Es kann aber auch alkylsubstituiertes Melamin verwendet werden. Das Alkyl kann hierbei zum Beispiel Methyl oder Äthyl sein.

Unsubstituiertes Phenol ist im vorgeschlagenen Verfahren bevorzugt, da es in den Harzen die grösste Bedeutung erlangt hat. Als mehrwertige Phenole kommen z.B. die Dihydroxybenzole in Frage, besonders Resorcin. Als alkylsubstituierte Phenole sind besonders die Kresole und Xylenole zu nennen.

Unter den Aldehyden ist Formaldehyd besonders bevorzugt. Er kann in den käuflichen wässrigen Formalinlösungen oder als Paraformaldehyd eingesetzt werden. Die wässrigen Lösungen enthalten im allgemeinen einen Alkohol, wie z.B. Methanol, als Stabilisierungsmittel, der jedoch nicht entfernt werden muss. Weitere geeignete Aldehyde sind z.B. Acetaldehyd und Propionaldehyd.

Das Molverhältnis von Melamin:Phenol:Aldehyd kann so gewählt werden, dass das hergestellte Harz für den beabsichtigten Verwendungszweck, z.B. die Verwendung als Formmasse, als Imprägnierharz, als Klebstoff oder als Beschichtungsmittel, die gewünschten Eigenschaften hat. Es hat sich als vorteilhaft erwiesen, ein Molverhältnis von etwa 1:(0,05-0,3):(1,5-6,0), besonders 1:(0,1-0,25):(2,0-4,0) einzustellen.

Das erfindungsgemässe Verfahren wird bevorzugt bei einem pH-Wert zwischen 8 und 9,5 durchgeführt.

Die zugesetzte Menge an wasserlöslichen Ammonium- oder Alkaliphosphaten oder -boraten beträgt mindestens 0,05 Gew.%. Die obere Grenze bestimmt sich nach Wirtschaftlichkeit und Zweckmässigkeit; so können z.B. 10 Gew.% und mehr zugegeben werden. Es genügen aber geringere Mengen zur Erzielung der gewünschten Wirkung, so dass sich Zusatzmengen von 0,05-1, insbesondere 0,1-0,5 Gew.% als vorteilhaft erwiesen haben.

Unter den Boraten und Phosphaten sind die Ammonium-, Kalium- und besonders Natriumsalze bevorzugt. Bei den Boraten und Phosphaten kann es sich um Salze mit monomeren, dimeren, oligomeren oder polymeren Anionen handeln. Unter den Boraten seien die Orthoborate, Pyroborate, Metaborate und jene genannt, die cyclische Anionen aufweisen, wie z.B. Borax.

Beispiele für die Phosphate sind: Orthophosphat und Orthohydrogenphosphat, Pyrophosphat und Hydrogenpyrophosphat, Triphosphat, Tetraphosphat, Metaphosphat, Trimetaphosphat, Tetrametaphosphat, z.B. Natriumphosphat, -monohydrogenphosphat, -dihydrogenphosphat oder -metaphosphat.

Bei der Durchführung des erfindungsgemässen Verfahrens geht man im allgemeinen in bekannter Weise so vor, dass man die Reaktionskomponenten zusammengibt und dann auf die gewünschte Temperatur erwärmt. Der Anteil der Reaktanden im wässrig-basischen Medium kann hierbei etwa von 20-80, vorzugsweise 40-60 Gew.% betragen, bezogen auf die gesamte Reaktionsmischung. Die Reaktionstemperatur soll zur Erzielung ausreichender Polykondensationsgeschwindigkeiten mindestens 70°C betragen. Vorzugsweise wird die Reaktion bei Rückflusstemperatur vorgenommen, die etwa 95°C beträgt.

In einer anderen Ausführungsform kann zunächst aus Phenol und einem Teil des Aldehyds ein Präkondensat im basischen Medium hergestellt werden und danach mit Melamin und dem Rest Aldehyd kondensiert werden.

Der Zugabezeitpunkt der Borate und Phosphate ist nicht kritisch. Sie können schon zu Reaktionsbeginn zugegen sein oder während der Reaktion zugegeben werden. Es wird jedoch bevorzugt, die Zugabe erst nach Beendigung der Polykondensation vorzunehmen, wobei auch eine vorherige Abkühlung der Reaktionsmischung auf z.B. unter 40°C zweckdienlich sein kann. Es ist daher also auch grundsätzlich möglich, wässrige Harzlösungen in einem ersten Verfahrensschritt herzustellen, zwischenzulagern und die Borate oder Phosphate erst unmittelbar vor der Entwässerung zur Gewinnung des Harzes zuzugeben.

Die Temperatur bei der Entwässerung beträgt mindestens 70°C, z.B. bis etwa 160°C. Bevorzugt ist ein Temperaturbereich von 100-140°C. Die Entwässerung wird in den hierfür bekannten Einrichtungen (z.B. Dünnschichtverdampfern) bei Normaldruck bis leichtem Unterdruck vorgenommen.

Erfindungsgemäss kann auch so vorgegangen werden, dass man nach der Polykondensation zunächst das Trockenharz durch Entwässerung isoliert und erst danach die Behandlung mit den Phosphaten und/oder Boraten durchführt. Die Vermischung des verfärbten Trockenharzes mit den Phosphaten und/oder Boraten erfolgt in den hierfür üblichen Einrichtungen. Die Erwärmung kann bis zum Aufschmelzen der Mischung erfolgen. Es ist besonders vorteilhaft, den Mischvorgang und das Erwärmen mit der Verarbeitung zu geformten Gegenständen zu verbinden, z.B. bei der Spritzguss- oder Extrusionsverarbeitung. Das Vermischen der Komponenten kann durch die Zugabe der Einzelbestandteile in den Trichter des Extruders erfolgen. Ein Vormischen der Komponenten ist jedoch vorteilhafter. Die Verarbeitungstemperaturen liegen im allgemeinen bei 90-150°C, vorzugsweise 100-140°C.

Vor, während oder nach der Polykondensation können die üblichen Zusätze beigegeben werden, z.B. Verarbeitungshilfsmittel, wie Weichmacher oder Gleitmittel, Füllstoffe, Verstärkerfüllstoffe, Farbstoffe oder Pigmente.

Ein besonderer Vorteil des erfindungsgemässen Verfahrens liegt darin, dass in einer möglichen Ausführungsform die Entwässerung mittels Anwendung des Imprägnierverfahrens erfolgen kann. Durch den Zusatz der Phosphate und/oder Borate nimmt nämlich die Stabilität der wässrigen Harzlösungen nur unwesentlich ab, so dass eine ausreichende Zwischenlagerung möglich ist. Grundsätzlich kann aber auch die Zugabe der Borate und/oder Phosphate erst vom Verarbeiter vorgenommen werden. Die Entwässerung kann auch so vorgenommen werden, dass man direkt zu Trockenharzen, z.B. in Form von Schuppen, gelangt, die nach den üblichen Methoden zu geformten Gebrauchsgegenständen aller Art weiterverarbeitet werden können. Das Trockenharz kann hierbei noch bis zu 20 Gew.%, vorzugsweise nicht mehr als 10 Gew.% Wasser enthalten.

Das erfindungsgemässe Verfahren führt überraschend zu duroplastischen Formmassen aus Melaminphenolaldehydharzen, die im wesentlichen weiss sind und die auch problemlos in hellen Farbtönen eingefärbt werden können. Als besonders vorteilhaft ist die gleichzeitig erzielte erhöhte Vergilbungsbeständigkeit durch Licht- und Lufteinwirkung anzusehen.

Die nachfolgenden Beispiele erläutern die Erfindung näher.

*Beispiel 1:*

Die folgenden Reaktionsbestandteile werden in einem Reaktionskessel zusammengegeben:

1,0 kg Melamin
0,125 kg Phenol
1,5 kg Formaldehyd (37%)
0,005 kg NaOH (50%)

Die Reaktionsmasse wird unter Rühren während 1 h auf Rückflusstemperatur erhitzt. Bei etwa 70°C entsteht aus der Aufschlämmung eine klare Lösung mit einem pH-Wert von ca. 9. Während der nun folgenden Kondensation fällt der pH-Wert wieder auf etwa 8. Die Polykondensation wird bis zu einem Trübungspunkt von 70°C geführt. (Bestimmung des Trübungspunktes: 5 ml Harzlösung und 5 ml destilliertes Wasser müssen beim Vermischen bei der vorgegebenen Temperatur von trüb nach klar übergehen, oder umgekehrt.)

Die Reaktionsmasse wird nun auf 40°C abgekühlt und 7 g Borax zugegeben. Danach wird der Harzsirup bei über 70°C im Dünnschichtverdampfer entwässert und ein weisses Trockenharz isoliert.

*Beispiel 2 und Vergleichsbeispiele:*

Man verfährt wie in Beispiel 1, gibt jedoch einmal kein Borax zu, einmal nach beendeter Kondensation zu dem abgekühlten Harz 24 g Borax und einmal zu Beginn der Polykondensation. An den erhaltenen Produkten wird die Farbzahl nach Gardener bestimmt. Aus der nachfolgenden Tabelle ist erkennbar, dass das nach dem erfindungsgemässen Verfahren hergestellte Produkt einen besseren Weissgrad hat.

| Kondensation | Farbzahl (Gardener) |
|---|---|
| ohne Zusatz (Vergleich) | 4 |
| Zugabe von Borax nach Abkühlung (erfindungsgemäss) | 3 |
| Zugabe von Borax vor Kondensationsbeginn (erfindungsgemäss) | 2 |

Die Produkte werden zusätzlich im Dünnschichtverdampfer bei einer Temperatur zwischen 90 und 160°C entwässert. An diesen Produkten werden mit einem Elephro-Gerät die Hellbezugswerte (HBW) und Blaugelbwerte (BGW) gemessen. Die negativeren Werte zeigen hierbei den grösseren Gelbstich an.

| Kondensation | HBW | BGW |
|---|---|---|
| ohne Zusatz (Vergleich) | 79,8 | −4,2 |
| Zugabe von Borax nach der Abkühlung (erfindungsgemäss) | 80,6 | −2,5 |
| Zugabe von Borax vor Kondensationsbeginn (erfindungsgemäss) | 81,7 | −1,1 |

*Beispiel 3:*

Aus einem gemahlenen Trockenharz mit 8% Restfeuchtigkeit, hergestellt nach Beispiel 1 unter Zugabe von 24 g Wirkmittel nach dem Abkühlen des Harzsirups, wird eine Vormischung folgender Zusammensetzung hergestellt:

    52,5 Gew.% Harz
    32,4 Gew.% Cellulose
    12   Gew.% Lithopone
    2    Gew.% $TiO_2$
    1    Gew.% Gleitmittel
    0,1  Gew.% Härter

Diese Vormischung wird mittels eines Kneters warmverdichtet, die gebildeten Schollen zu einem getrockneten Harz vermahlen. Aus diesem Granulat werden Platten gepresst. An dem Harz und an diesen Platten werden die HBW- und BGW-Werte gemessen.

Es werden nach dem gleichen Verfahren Platten hergestellt, das Wirkmittel aber zu Beginn der Polykondensation zugesetzt und die gleichen Messungen vorgenommen.

Als Vergleich werden Platten ohne Zusatz von Wirkmitteln verwende.

Zusätzlich wird noch die Farbzahl nach Gardener bestimmt.

Die Ergebnisse sind in der nachfolgenden Tabelle zusammengefasst. Aus der Tabelle ist ersichtlich, dass die erfindungsgemäss hergestellten Platten wesentlich tiefere Blaugelbbezugswerte aufweisen und auch nach 24 h UV-Bestrahlung nur gering vergilben.

| Kondensationszusatz | Zugabe Beginn | Zugabe nach dem Abkühlen | Farbzahl nach Gardener | Farbwerte des getrockneten Harzes | | Farbwerte der Platten nach dem Verpressen | | nach 24 h UV-Bestrahlung | |
|---|---|---|---|---|---|---|---|---|---|
| | | | | HBW | BGW | HBW | BGW | HBW | BGW |
| — | — | — | 4 | 79,8 | −4,2 | 76,8 | −17,6 | 74,4 | −21,4 |
| $Na_2B_4O_7$ | × | | 2 | 81,7 | −1,1 | 79,7 | −11,4 | 78,1 | −13,8 |
| $Na_2B_4O_7$ | | × | 3 | 80,6 | −2,5 | 80,8 | −12,1 | 78,4 | −15,9 |
| $NaH_2PO_4$ | × | | 1 | 82,5 | −0,73 | 81,7 | − 8,2 | 81,1 | −10,7 |
| $NaH_2PO_4$ | | × | 3 | 81,6 | −2,45 | 81,7 | − 8,2 | 81,0 | −12,7 |
| $Na_2HPO_4$ | × | | 3 | 79,9 | −4,7 | 79,3 | −14,9 | 77,6 | −19,9 |
| $Na_2HPO_4$ | | × | 3 | · 80,2 | −5,1 | 78,9 | −14,7 | 76,2 | −18,5 |
| $Na_4P_2O_7$ | × | | 2 | 80,8 | −3,6 | 81,1 | − 9,4 | 78,5 | −13,4 |
| $Na_4P_2O_7$ | | × | 2,5 | 80,4 | −4,1 | 78,0 | −16,5 | 77,7 | −20,1 |
| $NH_4H_2PO_4$ | × | | 2 | 82,7 | −1,3 | 78,9 | −12,8 | 78,6 | −16,2 |
| $NH_4H_2PO_4$ | | × | 2,5 | 81,6 | −3,4 | 78,6 | −12,5 | 77,3 | −17,8 |
| $(NH_4)_2HPO_4$ | × | | 2 | 82,8 | −1,9 | 78,9 | −13,4 | 78,6 | −16,9 |
| $(NH_4)_2HPO_4$ | | × | 2,5 | 81,4 | −2,8 | 78,8 | −13,0 | 78,3 | −17,0 |
| $KH_2PO_4$ | × | | 2 | 82,6 | −0,7 | 81,8 | − 7,7 | 81,4 | −19,6 |
| $KH_2PO_4$ | | × | 3 | 81,8 | −3,1 | 78,0 | −16,4 | 77,7 | −20,2 |
| $K_2HPO_4$ | × | | 3 | 80,9 | −3,5 | 78,6 | −14,9 | 76,8 | −18,5 |
| $K_2HPO_4$ | | × | 3-4 | 80,9 | −4,4 | 79,4 | −14,7 | 77,6 | −18,6 |

**Patentansprüche**

1. Verfahren zur Herstellung von im wesentlichen weissen und vergilbungsbeständigen Melaminphenolaldehydharzen durch die Polykondensation von unsubstituiertem oder alkylsubstituiertem Melamin mit ein- oder mehrwertigen, unsubstituierten oder alkylsubstituierten Phenolen und einem Aldehyd in einem wässrigen-basischen Reaktionsmedium bei einem pH-Wert zwischen 8 und 11, dadurch gekennzeichnet, dass man der Reaktionsmischung oder dem isolierten Trockenharz ein oder mehrere wasserlösliche Ammonium- oder Alkaliphosphate oder -borate in einer Menge von mindestens 0,05 Gew.%, bezogen auf die Reaktionsmischung bzw. das Trockenharz, zugibt und danach das gebildete Harz durch. Entwässerung bei einer Temperatur von mindestens 70°C isoliert oder das Trockenharz auf mindestens 70°C erwärmt.

2. Verfahren gemäss Anspruch 1, dadurch gekennzeichnet, dass als mehrwertige Phenole Dihydroxybenzole, besonders Resorcin, als alkylsubstituierte Phenole, Kresole oder Xylenole und dass insbesondere Phenol selbst eingesetzt werden.

3. Verfahren gemäss Anspruch 1, dadurch gekennzeichnet, dass als Aldehyd Acetaldehyd und insbesondere Formaldehyd eingesetzt wird.

4. Verfahren gemäss Anspruch 1, dadurch gekennzeichnet, dass das Molverhältnis von Melamin/Phenol/Aldehyd 1/(0,05-0,3)/(1,5-6,0), besonders 1/(0,1-0,25)/(2,0-4,0) ist.

5. Verfahren gemäss Anspruch 1, dadurch gekennzeichnet, dass die Erwärmung des Trockenharzes während der Verarbeitung zu geformten Gegenständen erfolgt.

6. Verfahren gemäss Anspruch 1, dadurch gekennzeichnet, dass die Phosphate oder Borate in einer Menge von 0,05-1, besonders 0,1-0,5 Gew.% zugegeben werden.

7. Verfahren gemäss Anspruch 1, dadurch gekennzeichnet, dass die Ammonium, Kalium- und besonders Natriumphosphate oder -borate zugegeben werden.

8. Verfahren gemäss Anspruch 1, dadurch gekennzeichnet, dass die Borate und Phosphate monomere, dimere, oligomere oder polymere Anionen aufweisen.

9. Verfahren gemäss Anspruch 1, dadurch gekennzeichnet, dass man Borax, Natriumphosphat, Natriumhydrogenphosphat, Natriumdihydrogenphosphat, Natriumpyrophosphat oder Natriummetaphosphat zugibt.

10. Verfahren gemäss Anspruch 1, dadurch gekennzeichnet, dass die Entwässerung bei einer Temperatur von 70 bis 160°C, vorzugsweise 100 bis 140°C, vorgenommen wird.

## Claims

1. A process for the production of melaminephenolaldehyde resins which are substantially white and resistant to yellowing, by the polycondensation of unsubstituted or alkyl-substituted melamine with mono- or polyhydric, unsubstituted or alkyl-substituted phenols and an aldehyde, in an aqueous basic reaction medium at a pH value between 8 and 11, which comprises adding to the reaction mixture or to the isolated dry resin one or more water-soluble ammonium or alkali phosphates or ammonium or alkali borates in an amount of at least 0.05% by weight, based on the reaction mixture or the dry resin, and subsequently isolating the resulting resin by dehydration at a temperature of at least 70°C or heating the dry resin to at least 70°C.

2. A process according to claim 1, which comprises the use of dihydroxybenzenes, in particular resorcinol, as polyhydric phenols, of cresols or xylenols as alkyl-substituted phenols, and, in particular, of phenol itself.

3. A process according to claim 1, wherein the aldehyde is acetaldehyde and, in particular, formaldehyde.

4. A process according to claim 1, wherein the molar ratio of melamine/phenol/aldehyde is 1/(0.05-0.3)/(1.5-6.0), in particular 1/(0.1-0.25)/(2.0-4.0).

5. A process according to claim 1, wherein the dry resin is heated during the processing to moulded articles.

6. A process according to claim 1, wherein the phosphates or borates are added in an amount of 0.05 to 1% by weight, in particular 0.1 to 0.5% by weight.

7. A process according to claim 1, wherein ammonium, potassium and, in particular, sodium phosphates or borates are added.

8. A process according to claim 1, wherein the borates and phosphates contain monomeric, dimeric, oligomeric or polymeric anions.

9. A process according to claim 1, wherein borax, sodium phosphate, sodium hydrogenphosphate, sodium dihydrogenphosphate, sodium pyrophosphate or sodium metaphosphate is added.

10. A process according to claim 1, wherein the dehydration is carried out at a temperature in the range from 70 to 160°C, preferably from 100 to 140°C.

## Revendications

1. Procédé de préparation de résines mélamine-phénolaldéhyde pratiquement blanches et résistantes au jaunissement, par polycondensation de la mélamine non substituée ou d'une mélamine porteuse d'un radical alkyle avec des monophénols ou polyphénols non substitués ou porteurs d'un substituant alkylique et d'un aldéhyde, dans un milieu réactionnel aqueux basique, à un pH compris entre 8 et 11, caractérisé en ce qu'on ajoute au mélange réactionnel, ou à la résine sèche isolée, un ou plusieurs phosphates ou borates d'ammonium ou de métaux alcalins solubles dans l'eau, en une quantité d'au moins 0,05% en poids par rapport au mélange réactionnel ou à la résine sèche, puis on isole la résine formée en la déshydratant à une température d'au moins 70°C ou on chauffe la résine sèche à au moins 70°C.

2. Procédé selon la revendication 1, caractérisé en ce qu'on met en jeu, comme polyphénols, des dihydroxybenzènes, en particulier le résorcinol, ou, comme phénols porteurs d'un radical alkyle, des crésols ou des xylénols, ou en ce qu'on utilise plus particulièrement le phénol lui-même.

3. Procédé selon la revendication 1, caractérisé en ce qu'on utilise, comme aldéhyde, l'acétaldéhyde ou, mieux, le formaldéhyde.

4. Procédé selon la revendication 1, caractérisé en ce que la proportion molaire mélamine/phénol/aldéhyde est de 1/(0,05-0,3)/(1,5-6,0), en particulier de 1/(0,1-0,25)/(2,0-4,0).

5. Procédé selon la revendication 1, caractérisé en ce que le chauffage de la résine sèche est effectué au cours de la transformation conduisant à des objets moulés.

6. Procédé selon la revendication 1, caractérisé en ce que les phosphates ou les borates sont ajoutés en une quantité de 0,05 à 1% en poids, en particulier de 0,1 à 0,5% en poids.

7. Procédé selon la revendication 1, caractérisé en ce qu'on ajoute les phosphates ou borates d'ammonium, de potassium ou, plus spécialement, de sodium.

8. Procédé selon la revendication 1, caractérisé en ce que les borates et phosphates comportent des anions monomères, dimères, oligomères ou polymères.

9. Procédé selon la revendication 1, caractérisé en ce qu'on ajoute du borax, du phosphate de sodium, de l'hydrogénophosphate de sodium, du dihydrogénophosphate de sodium, du pyrophosphate de sodium ou du métaphosphate de sodium.

10. Procédé selon la revendication 1, caractérisé en ce que la déshydratation est effectuée à une température de 70 à 160°C, de préférence de 100 à 140°C.